# FASCICULE DE BREVET EUROPEEN

(11) **EP 1 555 794 B1**
(45) Date de publication et mention de la délivrance du brevet: **19.03.2008**
(21) Numéro de dépôt: 05290037.0
(22) Date de dépôt: 06.01.2005
(51) Int. Cl.: H04M 1/02, H04B 1/38, H01Q 1/24, H04Q 7/32, H04M 1/725

(54) **Téléphone mobile du type à deux modules distincts**
Mobilfunkgerät vom Typ an zwei verschiedenen Modulen
Mobile telephone of the type with two distinct modules

(30) Priorité: 13.01.2004 FR 0400277
(43) Date de publication de la demande: 20.07.2005
(73) Titulaire: SAGEM Communication, 75015 Paris (FR)
(72) Inventeur: Charbonnier, Philippe, 78600 Le Mesnil le Roi (FR)
(74) Mandataire: Maillet, Alain

(56) Documents cités:
- EP-A- 0 840 465
- WO-A-00/56051
- WO-A-20/04025929
- DE-A- 10 237 098
- GB-A- 2 340 691

## Description

### DOMAINE TECHNIQUE DE L'INVENTION

La présente invention concerne un téléphone mobile du type à deux modules distincts.

### ARRIERE-PLAN TECHNOLOGIQUE DE L'INVENTION

On sait qu'un téléphone mobile peut émettre des rayonnements électromagnétiques susceptibles d'agir sur les tissus à proximité, notamment ceux de la tête de l'utilisateur lorsque le téléphone est placé contre son oreille alors qu'il est en communication. On a défini une grandeur objective de référence liée à la puissance maximale pouvant être absorbée par les tissus corporels et qu'il est souhaitable qu'un téléphone mobile ne dépasse pas. Cette grandeur est appelée débit d'absorption spécifique ou plus communément SAR (Specific Absorption Rate). Elle fait l'objet de valeurs normalisées que les constructeurs sont tenus de ne pas dépasser.

Différentes méthodes ont déjà été proposées pour résoudre, au moins en partie, ce problème lié à une valeur excessive du SAR. Parmi celles-ci, on peut citer une méthode qui consiste à éloigner la partie rayonnante du téléphone mobile d'une autre partie de ce téléphone qui elle est nécessairement portée contre la tête de l'utilisateur. Une telle solution est par exemple celle qui est décrite dans le document de brevet GB-A-2 364 846. Le téléphone mobile décrit dans ce document est divisé en deux modules distincts dont l'un, le module émetteur, peut être éloigné de la tête de l'utilisateur. En l'occurrence, le premier module comporte, d'une part, l'ensemble des éléments servant au traitement des signaux radiofréquences reçus, à savoir une antenne de réception, un amplificateur radiofréquence, un démodulateur du type GMSK, un décodeur de signaux numériques en signaux audio et un haut-parleur et, d'autre part, un microphone. Quant au second module, il comporte l'ensemble des éléments servant au traitement des signaux radiofréquences à émettre, à savoir un codeur de signaux audio en signaux numériques, un modulateur du type GMSK, un amplificateur radiofréquence et une antenne d'émission, à l'exception du microphone.

Le premier et le second modules sont reliés l'un à l'autre par un lien radio-fréquence à basse fréquence de manière que les signaux audio générés par le microphone du premier module puissent être transmis au codeur du second module. Pour ce faire, le premier module comporte un émetteur radio-fréquence à basse fréquence auquel sont appliqués les signaux audio du microphone alors que le second module comporte un récepteur correspondant à cet émetteur qui est relié à l'entrée du codeur pour lui transmettre les signaux audio qu'il a reçus de l'émetteur.

Dans tout téléphone mobile, il y a une interaction permanente entre la chaîne de réception et la chaîne d'émission. En effet, les signaux émis doivent être positionnés dans le temps avec précision par rapport aux signaux reçus. De plus, d'une manière générale, la plupart des fonctions d'émission d'un téléphone mobile est commandée par un protocole de signalisation reçu de l'infrastructure sur la voie réception (désignation du canal à employer pour l'émission, télécommande de puissance, etc.).

Il s'ensuit que la mise en oeuvre de cette contrainte d'interaction entre chaîne d'émission et chaîne de réception à l'architecture proposée dans le document GB-A-2 364 846 peut s'avérer complexe rendant la solution qui y est proposée rédhibitoire.

En tant que téléphone mobile en deux parties, on connaît également le document de brevet DE-A-102 37 098 qui décrit un téléphone mobile du type GSM comportant une chaîne d'émission prévue pour recevoir les signaux d'un microphone et pour délivrer des signaux en bande de base qui, une fois modulés sur la fréquence d'émission f du téléphone mobile, amplifiés puis fournis à une antenne, seront aptes à être émis en tant que signaux radiofréquences.

Le téléphone mobile qui est décrit dans ce document comporte deux modules dont le premier comporte des moyens de modulation pour moduler les signaux délivrés en bande de base par la chaîne d'émission afin de les rendre conformes au standard Bluetooth alors que le second comporte des moyens de réception des signaux Bluetooth, des moyens de démodulation pour rendre lesdits signaux en bande de base, et des moyens de modulation prévue pour délivrer ces signaux en bande de base modulés sur la fréquence d'émission f du téléphone mobile de manière à pouvoir être émis en tant que signaux radiofréquences conformes au standard de téléphone mobile, c'est-à-dire GSM.

Si le téléphone mobile décrit dans ce document résout le problème soulevé ci-dessus, cela est fait par une augmentation substantielle de sa complexité, notamment du fait, d'une part, de l'ajout d'un processus de modulation/démodulation demandeur de ressources et, d'autre part, d'une modulation (en l'occurrence Bluetooth) dans le premier module et d'une démodulation suivie d'une autre modulation dans le second module, obligeant à prévoir deux unités de gestion, une dans le premier module et l'autre dans le second module.

On connaît également le document EP-A-840 465 qui décrit un téléphone mobile comportant deux modules : dans l'un, sont installés au moins une batterie, une antenne, des moyens pour émettre des ondes radio et des moyens de communication avec le second module ; dans l'autre, sont installés des moyens de communication avec le premier module et des moyens pour répondre à un appel. Les moyens de communication des modules respectifs communiquent entre eux par des signaux de type différents de celui du téléphone mobile. Une première unité de gestion se trouve dans le premier module et une seconde unité de gestion se trouve dans le second module. Le téléphone mobile décrit dans ce document non seulement ne résout pas le problème évoqué ci-dessus, mais a une complexité telle que deux unités de gestion sont nécessaires.

Le but de la présente invention est de proposer un téléphone mobile qui est constitué de deux modules distincts, dont l'un peut être éloigné de la tête de l'utilisateur lors d'une communication, reprenant ainsi le concept notamment décrit dans le document GB-A-2 364 846 en tant que solution au problème d'un SAR trop élevé, mais dont l'architecture soit telle que l'interaction de la chaîne d'émission et de la chaîne de réception soit relativement simple à mettre en oeuvre, contrairement à ce que les documents de brevet DE-A-102 37 098 et EP-A-840 465 décrivent.

### DESCRIPTION GENERALE

A cet effet, un téléphone mobile selon la présente invention est du type comportant une chaîne d'émission prévue pour recevoir les signaux d'un microphone et pour délivrer des signaux correspondants modulés sur une porteuse à une fréquence f₀, un amplificateur pour attaquer une antenne d'émission pour émettre lesdits signaux modulés en tant que signaux radiofréquences, et une chaîne de réception pour la réception et la restitution des signaux radiofréquences reçus, ladite chaîne d'émission et ladite chaîne de réception étant pilotées par une unité de gestion, ledit téléphone mobile comprenant deux modules distincts.

Selon une première caractéristique avantageuse de la présente invention, ledit téléphone mobile est caractérisé en ce que :
- la chaîne d'émission, la chaîne de réception et ladite unité de gestion sont montées dans un desdits modules, dit premier module, alors que ledit amplificateur et ladite antenne d'émission sont montés dans l'autre module, dit second module,
et en ce que
- ledit premier module comporte en outre des moyens de changement de fréquence pour transposer la fréquence de la porteuse des signaux issus de la chaîne d'émission et des moyens d'émission desdits signaux à fréquence de porteuse transposée, et
- ledit second module comporte des moyens de réception desdits signaux émis par lesdits moyens d'émission et des moyens de changement de fréquence pour transposer la fréquence desdits signaux ainsi reçus sur la fréquence de la porteuse des signaux radiofréquences.

Selon une autre caractéristique de l'invention, les moyens d'émission et les moyens de réception assurent une liaison filaire, optique ou hertzienne.

Selon une autre caractéristique de l'invention, la fréquence transposée obtenue par les moyens de changement de fréquence dudit premier module est nulle. Mais, selon une autre caractéristique de l'invention, les moyens d'émission et les moyens de réception assurent une liaison hertzienne à une fréquence de 2,45 GHz.

Selon une autre caractéristique de l'invention, des informations concernant le niveau de puissance d'émission dudit téléphone sont transmises, via lesdits moyens d'émission et lesdits moyens de réception, dudit premier module audit second module où elles sont fournies à une entrée de commande dudit amplificateur pour commander son niveau de puissance de sortie.

De même, selon une autre caractéristique de l'invention, des informations concernant la fréquence de la porteuse d'émission dudit téléphone sont transmises, via lesdits moyens d'émission et lesdits moyens de réception, dudit premier module audit second module où elles sont fournies à une entrée de commande des moyens de changement de fréquence.

Selon une autre caractéristique de l'invention, ledit premier module comporte un multiplexeur prévu pour multiplexer des signaux portant lesdites informations avec les signaux à fréquence transposée et ledit second module comporte un démultiplexeur pour délivrer les signaux à fréquence transposée, d'une part, et les signaux portant lesdites informations, d'autre part.

Selon une autre caractéristique de l'invention, lesdites informations modulent une porteuse pour former ainsi lesdits signaux portant lesdites informations, ledit multiplexeur et ledit démultiplexeur étant du type à division de fréquence.

Selon une autre caractéristique de l'invention, un canal de signalisation est prévu entre ledit premier module et ledit second module sur lequel circulent des signaux de signalisation pour établir la liaison entre les moyens d'émission dudit premier module et les moyens de réception dudit second module de manière à assurer qu'ils sont appariés.

Selon une autre caractéristique de l'invention, un canal de signalisation est prévu entre ledit premier module et ledit second module sur lequel circulent des signaux de signalisation pour vérifier l'intégrité de la liaison entre les moyens d'émission dudit premier module et les moyens de réception dudit second module.

La présente invention concerne également un système de téléphone mobile qui est caractérisé en ce qu'il comporte un téléphone mobile comme défini précédemment et au moins un autre module identique audit second module dudit téléphone mobile.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 représente une vue schématique d'un téléphone mobile selon un premier mode de réalisation de la présente invention ; et
la Fig. 2 représente une vue schématique d'un téléphone mobile selon un second mode de réalisation de la présente invention.

### DESCRIPTION DES MODES DE REALISATION PREFERES DE L'INVENTION

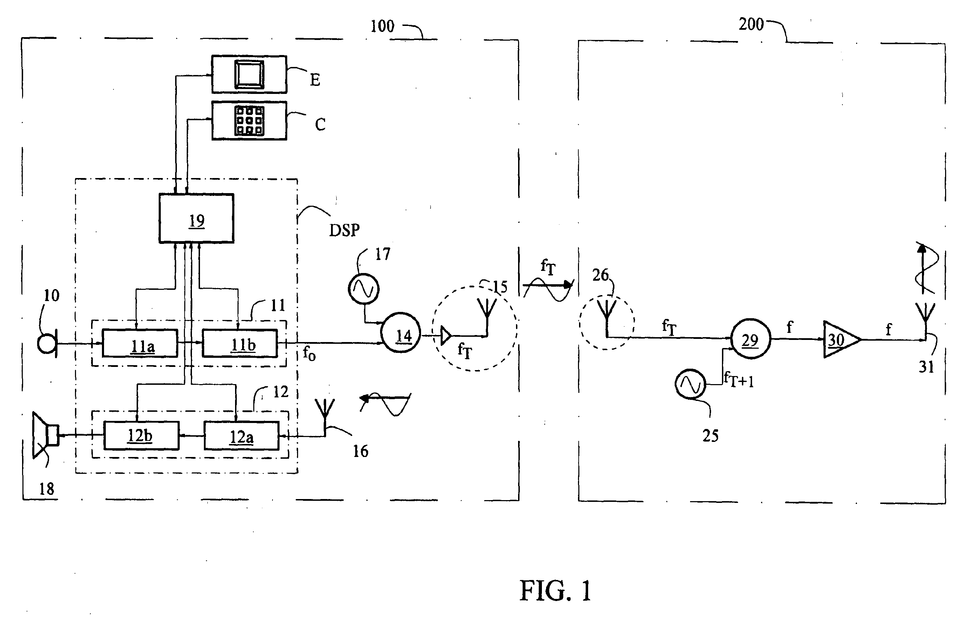

Un appareil de téléphonie mobile selon l'invention tel que celui qui est représenté à la Fig. 1 comporte deux modules distincts 100 et 200 prévus pour être éloignés l'un de l'autre sur des distances prédéterminées relativement courtes, par exemple de l'ordre d'un mètre.

Le premier module 100 comporte, d'une part, l'ensemble des moyens d'émission nécessaires à l'émission de signaux radiofréquences à partir des signaux sonores émis par l'utilisateur devant un microphone 10, à l'exception cependant de l'amplificateur de puissance 30 et de l'antenne d'émission 31 qui eux sont compris dans le second module 200. Le premier module 100 comporte en outre l'ensemble des moyens de réception et de restitution servant à la réception des signaux radiofréquences généralement émis par une station de base d'un réseau de téléphonie mobile et à la restitution des signaux sonores correspondants sur un haut-parleur ou un écouteur 18.

Plus précisément, le premier module 100 comporte une chaîne d'émission 11 constituée d'un codeur 11a et d'un modulateur 11b. Le microphone 10 est relié à l'entrée du codeur 11a de la chaîne d'émission 11 pour lui transmettre les signaux électriques correspondant aux signaux sonores qu'il reçoit afin de les coder en signaux numériques. Le codage dont il est question ici peut englober non seulement le codage des signaux sonores proprement dit mais également d'autres opérations telles qu'un codage canal, un entrelacement, un cryptage et l'ajout d'informations pour la détection et la correction d'erreurs et pour la synchronisation. Le résultat de ce codage pris au sens large du terme est un signal numérique généralement sous forme de trames successives contenant toutes les informations pour recouvrer le signal sonore d'origine.

Dans le cas d'un téléphone mobile conforme au standard GSM, le signal numérique est une trame TDMA (Time Division Multiplexage Access) de durée 4,6 ms comportant huit intervalles de temps de 0,57 ms.

La sortie du codeur 11a est reliée à l'entrée du modulateur 11b qui a pour fonction de moduler une porteuse à la fréquence f₀ avec les signaux numériques délivrés par le codeur 11a. Dans le cadre de la présente invention, la modulation effectuée par le modulateur 12a pourrait être de tout type numérique (signifiant que le signal modulant est numérique), comme les types de modulations FSK, PSK, QPSK, MSK, GMSK, etc.

Dans le cas d'un téléphone mobile conforme au standard GSM, la modulation opérée par le modulateur 11b est une modulation du type GMSK (Gaussian Minimum Shift Keying).

Les moyens de réception et de restitution sont constitués d'une chaîne de réception 12 elle-même constituée d'un démodulateur 12a opérant sur les signaux radiofréquences reçus d'une antenne 16 et une démodulation de type inverse de la modulation effectuée par le modulateur 11b. Les signaux démodulés sont fournis à l'entrée d'un décodeur 12b qui exécute un décodage inverse du codage effectué par le codeur 11 a. Les signaux décodés sont fournis, généralement après amplification, à un moyen de restitution 18 tel qu'un haut-parleur ou un écouteur.

Une unité de gestion 19 assure le contrôle du codeur 11 a et du modulateur 11 b de la chaîne d'émission 11 et le contrôle du démodulateur 12a et du décodeur 12b de la chaîne de réception 12 ainsi que leur interaction conforme au standard mis en oeuvre, tel que le calage temporel de l'émission par rapport à la réception, gestion des ressources radio selon le protocole reçu de l'infrastructure, etc. Elle est également reliée à un écran E et un clavier C assurant ainsi une interface homme/machine. Comme on le comprendra par la suite, l'invention ne nécessite qu'une unique unité de gestion 19 laquelle est placée dans le premier module 100. Aucun signal de gestion n'est transmis au second module 200. Il en résulte l'avantage que la chaîne émission 11 et la chaîne réception 12 peuvent être réalisées par un unique composant 110, tel qu'un processeur dit DSP (Digital Signal Processor) utilisé en partage de temps.

Comme on le comprendra par la suite, la fréquence f₀ de la porteuse de modulation opérée par le modulateur 11b n'est pas nécessairement la fréquence d'émission du téléphone mobile qui, elle sera notée f. Même, cette fréquence f₀ pourrait être nulle selon la présente invention.

Dans un premier mode de réalisation, les signaux radiofréquences délivrés par le modulateur 11b sont fournis à des moyens de changement de fréquence 14 dont la fonction est de transposer les signaux modulés initialement sur une porteuse à la fréquence f₀ (qui peut être nulle) à une fréquence porteuse f_{T}. Comme il est connu dans le domaine de la technique, les moyens de changement de fréquences 14 peuvent être constitués d'un mélangeur à deux entrées, l'une recevant les signaux modulés à la fréquence f₀ et l'autre recevant un signal sinusoïdal, par exemple généré par un oscillateur 17 approprié à fréquence fixe égale soit à une fréquence f_{T} + f₀, soit à une fréquence f_{T} - f₀. Le signal résultant est un signal modulé correspondant au signal modulé d'entrée mais transposé à deux fréquences porteuses, l'une étant la somme des fréquences des signaux d'entrée, l'autre étant la différence. Les moyens de changement de fréquence 14 incorporent un filtre pour éliminer l'une des deux fréquences résultantes, celle qui est la moins pratique pour la mise en oeuvre de l'invention.

Les signaux en sortie des moyens de changement de fréquence 14 sont fournis à des moyens d'émission 15, constitués dans l'exemple de réalisation représenté, par un amplificateur approprié et une antenne.

Selon le premier mode de réalisation de la présente invention, le second module 200 comporte des moyens de réception 26, constitués ici d'une antenne, prévus pour recevoir les signaux reçus des moyens d'émission 15. Entre les moyens d'émission 15 et les moyens de réception 26, est établi un lien de transmission.

Les signaux en sortie des moyens de réception 26 sont fournis à des moyens de changement de fréquence 29 dont la fonction est de transposer les signaux reçus modulés à la fréquence porteuse f_{T} en des signaux modulés à la fréquence porteuse f. Similairement aux moyens de changement de fréquence 14, les moyens de changement de fréquence 29 peuvent être constitués d'un mélangeur à deux entrées, l'une recevant les signaux modulés à la fréquence porteuse f_{T} et l'autre recevant un signal sinusoïdal, par exemple généré par un oscillateur 25 approprié, soit à une fréquence f + f_{T} égale à la somme de la fréquence d'émission f et de la fréquence transposée f_{T}, soit à une fréquence f - f_{T} f_{T} égale à la différence de la fréquence d'émission f et de la fréquence transposée f_{T}. A l'instar des moyens de changement de fréquence 14, les moyens 29 incorporent un filtre pour éliminer la fréquence indésirable.

On notera que les signaux en sortie des moyens de changement de fréquence 29 sont des signaux radiofréquences prêts à être émis après amplification. Dans le cas d'un téléphone conforme au standard GSM, il s'agit donc de trames numériques TDMA modulant en GMSK une porteuse de fréquence f.

Le second module 200 comporte encore un amplificateur 30 dont l'entrée est reliée à la sortie des moyens 29 et dont la sortie attaque une antenne d'émission 31.

Les moyens d'émission 15 et les moyens de réception 26 peuvent être de tout type dès lors qu'ils assurent la transmission des signaux modulés à la fréquence transposée f_{T}. La liaison qu'ils assurent pourrait être filaire, optique (par exemple infra-rouge), ou hertzienne.

Même dans ce dernier cas, l'énergie qui est rayonnée par cette liaison est faible comparée à celle qui est émise par l'antenne 31, si bien que l'invention résout les problèmes liés au SAR évoqués dans le préambule de la présente description. En effet, c'est le second module 200 qui rayonne le plus d'énergie à haute-fréquence pouvant être dommageable pour les tissus de la tête de l'utilisateur. Or, ce second module 200 du fait qu'il est possible de l'éloigner du premier module 100 pourrait être porté à un endroit de corps de l'utilisateur moins sensible, par exemple à la ceinture.

Dans le cas où les moyens d'émission 15 et les moyens de réception 26 assurent une liaison hertzienne, la fréquence transposée f_{T} est avantageusement 2,45 GHz, qui est une fréquence légalement disponible pour tout type d'application.

On notera que la fréquence transposée f_{T} pourrait être nulle, signifiant que le signal en sortie des moyens de changement de fréquence 14 est identique au signal modulant en sortie du codeur 11a. Même dans ce cas, l'avantage de l'invention réside dans le fait que le processus de modulation, ainsi que tout processus d'émission à l'exception de l'amplification, sont effectués sous le contrôle de l'unité de gestion 19 et, par conséquent, dans le premier module 100.

Généralement, dans un système de téléphonie mobile, suite à un processus qui n'est pas décrit ici, chaque téléphone doit, sous la commande de la station de base avec laquelle il est en communication, contrôler sa puissance d'émission. Il est possible d'effectuer cette commande dans le premier module 100 au niveau de la chaîne d'émission 11 sous contrôle de l'unité de gestion 19, mais, pour des questions de rendement, il serait préférable de l'effectuer au niveau de l'amplificateur de puissance final 30. Or, dans le mode de réalisation de la Fig. 1, ceci n'est pas possible puisque l'amplificateur de puissance 30 est hors du contrôle de l'unité de gestion 19.

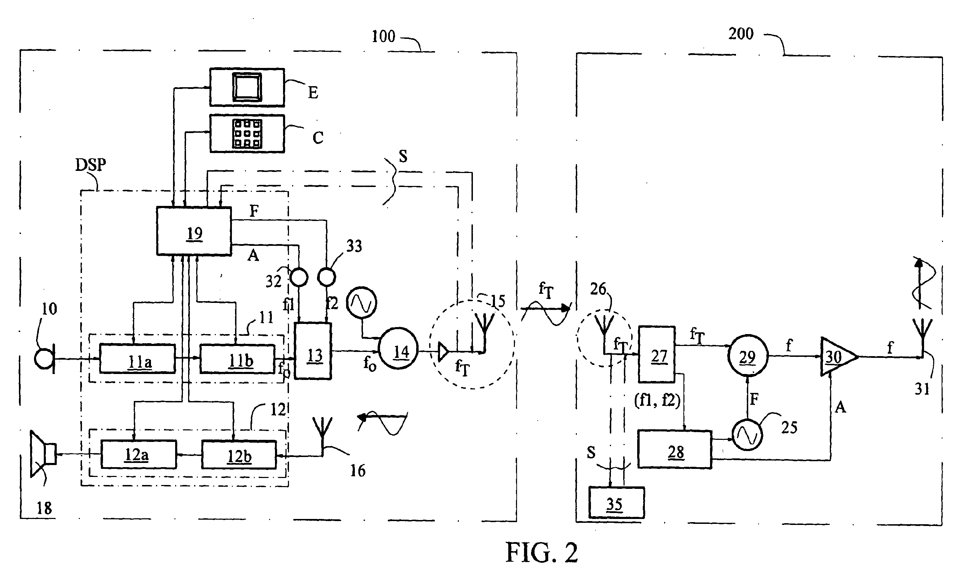

C'est pourquoi, selon le second mode de réalisation de la présente invention qui est représenté à la Fig. 2 (dans laquelle les mêmes éléments que ceux déjà présents à la Fig. 1 portent les mêmes références), des informations concernant le niveau de puissance d'émission, qui sont disponibles à la sortie de l'unité de gestion 19, sont transmises, via les moyens d'émission 15 et les moyens de réception 26, du premier module 100 au second module 200 où elles sont fournies à une entrée de commande de l'amplificateur 30 pour commander son niveau de sortie.

Plus précisément, le premier module 100 comporte un multiplexeur 13 dont une première entrée reçoit le signal codé issu du modulateur 11b et dont la seconde entrée reçoit un signal contenant l'information de niveau de puissance d'émission A. Quant au second module 200, il comporte un démultiplexeur 27 prévu pour délivrer sur une sortie le signal modulé à la fréquence transposée f_{T} et sur l'autre sortie le signal contenant l'information de niveau de puissance d'émission, lequel est fourni à l'entrée de commande de l'amplificateur 30.

Le multiplexage opéré par le multiplexeur 13 pourrait être de tout type, par exemple un multiplexage temporel ou fréquentiel.

Dans le cas d'un multiplexage fréquentiel, les signaux modulés issus du modulateur 12a sont à la fréquence f₀ alors que les signaux d'information de niveau de puissance sont modulés à une fréquence f₁ dans un modulateur 32. Après changement de fréquence, les premiers sont à la fréquence f_{T} alors que les seconds sont à la fréquence f₁ - f₀ + f_{T}. Le démultiplexeur 27 sera du type délivrant sur une première sortie les signaux à la fréquence f_{T} et, sur l'autre sortie, les signaux à la fréquence f₁ - f₀ + f_{T}. Un démodulateur 28 assure le recouvrement du signal de commande A qui est alors fourni à l'amplificateur 30.

On notera que le multiplexeur 13 pourrait être prévu à la sortie des moyens de changement de fréquence 14.

Selon certains standards de téléphonie mobile, ou selon des modes de fonctionnement de ces standards, la fréquence de la porteuse d'émission finale f d'un téléphone mobile peut être modifiée, sous la commande de la station de base avec laquelle ce téléphone est en communication, trame à trame. Des sauts de la fréquence de la porteuse sont alors prévus trame à trame.

Selon un troisième mode de réalisation de la présente invention, les informations F concernant la fréquence de la porteuse d'émission, qui sont disponibles à la sortie de l'unité de gestion 19, sont transmises, via les moyens d'émission 15 et les moyens de réception 26, du premier module 100 au second module 200 où elles sont fournies à une entrée de commande des moyens de changement de fréquence 29.

Plus précisément, dans le premier module 100, un signal portant les informations F de fréquence de la porteuse est multiplexé, par exemple dans le multiplexeur 13, avec le signal codé issu du modulateur 11b et, dans le second module 200, il est démultiplexé, par exemple par le démultiplexeur 27, les informations F étant extraites du signal ainsi démultiplexé, par exemple dans l'unité 28 pour être ensuite délivrées à l'entrée de commande des moyens 29.

Par exemple, selon le mode de réalisation représenté, le signal portant les informations est un signal résultant de la modulation d'une porteuse à la fréquence f₂ par les informations de fréquence de porteuse.

Si la fréquence de la porteuse d'émission doit être de f₀ + Δf x n, Δf désignant la largeur d'un saut de fréquence unitaire et n un indice de saut, l'information concernant la fréquence de porteuse d'émission peut être le chiffre n. A l'instar des modes de réalisation précédents, les moyens de changement de fréquence 14 effectuent une transposition de la fréquence f₀ à la fréquence transposée f_{T}. L'information n, après transmission du premier module 100 au module 200 par l'intermédiaire des moyens d'émission 15 et des moyens de réception 26, est disponible, après démultiplexage par le démultiplexeur 27 et démodulation dans le démodulateur 28, à l'entrée des moyens de changement de fréquence 29 lesquels effectueront alors le changement de fréquence de la fréquence transposée f_{T} à la fréquence de la porteuse souhaitée : f₀ + Δf x n. Cela peut être accompli par le mélange du signal radiofréquence à la fréquence f_{T} à un signal sinusoïdal à la fréquence f₀ - f_{T} + Δf x n, par exemple délivré par un oscillateur 25 approprié dont la fréquence est commandée par n.

Dans un autre mode de réalisation de la présente invention, un canal de signalisation est établi entre le premier module 100 et le second module 200. Sur ce canal, qui peut être bidirectionnel, des informations de signalisation S circulent pour vérifier l'intégrité de la liaison entre les moyens d'émission 15 et les moyens de réception 26. Ces signaux de signalisation S peuvent également servir à établir la liaison entre les moyens d'émission 15 et les moyens de réception 26 de manière à assurer que le premier module 100 et le second module 200 sont appariés et que l'un ne puisse pas communiquer avec un autre du même type mais d'un autre téléphone selon la présente invention.

Dans le premier module 100, ces signaux de signalisation sont gérés par l'unité 29 alors que dans le second module 200, ils le sont par une unité de gestion de signalisation 35.

Le canal de signalisation peut être établi à une fréquence décalée d'une certaine quantité par rapport à la fréquence transposée f_{T}, dans le sens premier module 100 vers second module 200, et d'une autre quantité dans l'autre sens.

On comprendra, qu'au moyen de ces signaux de signalisation S, le premier module 100 établit et maintient une communication avec un second module 200.

On notera qu'un même module 100 pourrait communiquer avec plusieurs seconds modules 200, lesquels pourraient être respectivement placés à divers endroits d'utilisation, tels qu'un endroit de la maison de l'utilisation, de sa voiture ou de son bureau, dès lors que les premier module et second module sont à portée l'un de l'autre. Ainsi, un téléphone mobile selon la présente invention peut être associé à au moins un autre module identique à son second module 200 pour constituer un système de téléphone mobile.

## Revendications

1. Téléphone mobile du type comportant une chaîne d'émission (11) prévue pour recevoir les signaux d'un microphone (10) et pourvue d'un modulateur (11b) pour délivrer des signaux correspondants modulés par une modulation numérique du type identique à celle dudit téléphone mobile sur une porteuse à une première fréquence f₀, un amplificateur (30) relié à une antenne d'émission (31) pour émettre, modulés à la fréquence d'émission f dudit téléphone mobile, des signaux radiofréquences correspondant auxdits signaux modulés sur ladite première fréquence f0, et une chaîne de réception (12) prévue pour recevoir des signaux d'une antenne (16) et les restituer au travers de moyens de restitution (18) après qu'ils ont traversé un démodulateur (12a) et un décodeur (12b), ladite chaîne d'émission (11) et ladite chaîne de réception (12) étant pilotées par une unique unité de gestion (19), ledit téléphone mobile comprenant deux modules distincts,
**caractérisé en ce que** :
- la chaîne d'émission (11), la chaîne de réception (12) et ladite unité de gestion (19) sont montées dans un desdits modules (100), dit premier module, alors que ledit amplificateur (30) et ladite antenne d'émission (31) sont montés dans l'autre module (200), dit second module,
et **en ce que**
- ledit premier module (100) comporte en outre des moyens de changement de fréquence (14) pour transposer ladite première fréquence f0 de la porteuse des signaux modulés issus de la chaîne d'émission (11) à une seconde fréquence fT différente de ladite première fréquence f0 sans que le type de modulation ne soit modifié par ladite transposition, et des moyens d'émission (15) desdits signaux à ladite seconde fréquence fT, et
- ledit second module (200) comporte des moyens de réception (26) desdits signaux émis par lesdits moyens d'émission (15) et des moyens de changement de fréquence (14) pour transposer ladite seconde fréquence fT desdits signaux ainsi reçus à la fréquence f d'émission dudit téléphone mobile sans que le type de modulation ne soit modifié par ladite transposition.

2. Téléphone mobile selon la revendication 1, **caractérisé en ce que** les moyens d'émission (15) et les moyens de réception (26) assurent une liaison filaire, optique ou hertzienne.

3. Téléphone mobile selon la revendication 1 ou 2, **caractérisé en ce que** la fréquence f₀ de la porteuse des signaux modulés en sortie de ladite chaîne d'émission (11) dudit premier module (100) est nulle.

4. Téléphone mobile selon la revendication 1 ou 2, **caractérisé en ce que** la fréquence transposée obtenue par les moyens de changement de fréquence (14) dudit premier module (100) est nulle.

5. Téléphone mobile selon la revendication 2 ou 3, **caractérisé en ce que** les moyens d'émission (15) et les moyens de réception (26) assurent une liaison hertzienne à une fréquence de 2,45 GHz.

6. Téléphone mobile selon l'une des revendications précédentes, **caractérisé en ce que** des informations concernant le niveau de puissance d'émission dudit téléphone sont transmises, via lesdits moyens d'émission (15) et lesdits moyens de réception (16), dudit premier module (100) audit second module (200) où elles sont fournies à une entrée de commande dudit amplificateur (30) pour commander son niveau de puissance de sortie.

7. Téléphone mobile selon une des revendications précédentes, **caractérisé en ce que** des informations concernant la fréquence de la porteuse d'émission dudit téléphone sont transmises, via lesdits moyens d'émission (15) et lesdits moyens de réception (16), dudit premier module (100) audit second module (200) où elles sont fournies à une entrée de commande des moyens de changement de fréquence (29).

8. Téléphone mobile selon la revendication 6 ou 7, **caractérisé en ce que** ledit premier module (100) comporte un multiplexeur (13) prévu pour multiplexer des signaux portant lesdites informations avec les signaux à fréquence transposée et **en ce que** ledit second module (200) comporte un démultiplexeur (27) pour délivrer les signaux à fréquence transposée, d'une part, et les signaux portant lesdites informations, d'autre part.

9. Téléphone mobile selon la revendication 8, **caractérisé en ce que** lesdites informations modulent une porteuse pour former ainsi lesdits signaux portant lesdites informations, ledit multiplexeur (13) et ledit démultiplexeur (29) étant du type à division de fréquence.

10. Téléphone mobile selon une des revendications précédentes, **caractérisé en ce qu'**un canal de signalisation est prévu entre ledit premier module (100) et ledit second module (200) sur lequel circulent des signaux de signalisation pour établir la liaison entre les moyens d'émission (15) dudit premier module (100) et les moyens de réception (26) dudit second module (200) de manière à assurer qu'ils sont appariés.

11. Téléphone mobile selon une des revendications précédentes, **caractérisé en ce qu'**un canal de signalisation est prévu entre ledit premier module (100) et ledit second module (200) sur lequel circulent des signaux de signalisation pour vérifier l'intégrité de la liaison entre les moyens d'émission (15) dudit premier module (100) et les moyens de réception (26) dudit second module (200).

12. Système de téléphone mobile, **caractérisé en ce qu'**il comporte un téléphone mobile selon une des revendications précédentes et au moins un autre module identique audit second module (200) dudit téléphone mobile.

## Claims

1. Mobile telephone of the type comprising a transmission channel (11) intended to receive the signals from a microphone (10) and provided with a modulator (11b) for delivering corresponding signals modulated by a digital modulation of a kind identical to that of the mobile telephone on a carrier at a first frequency f0, an amplifier (30) connected to a transmission aerial (31) for transmitting radiofrequency signals modulated to the transmission frequency f of said mobile telephone and corresponding to said modulated signals at said first frequency f0, and a reception channel (12) intended to receive signals from an aerial (16) and restore them through restoration means (18) after they have passed through a demodulator (12a) and a decoder (12b), said transmission channel (11) and said reception channel (12) being controlled by a single control unit (19), said mobile telephone having two distinct modules,
**characterised in that**
- the transmission channel (11), the reception channel (12) and the control unit (19) are mounted in one of said modules (100), referred to as the first module, whereas said amplifier (30) and said transmission aerial (31) are mounted in the other module (200), referred to as the second module,
and **in that**
- the first module (100) further comprises frequency changing means (14) for transposing said first frequency f0 of the carrier of the modulated signals coming from the transmission channel (11) to a second frequency fT which is different from said first frequency f0 without the type of modulation being modified by said transposition, and means (15) for transmitting said signals at said second frequency fT, and
- said second module (200) comprises means (26) for receiving said signals transmitted by said transmission means (15) and frequency changing means (14) for transposing said second frequency fT of said signals thus received to the transmission frequency f of said mobile telephone without the type of modulation being modified by said transposition.

2. Mobile telephone according to claim 1, **characterised in that** the transmission means (15) and the reception means (26) provide a wired, optical or Hertzian connection.

3. Mobile telephone according to claim 1 or 2, **characterised in that** the frequency f₀ of the carrier of the signals modulated on leaving said transmission channel (11) of said first module (100) is zero.

4. Mobile telephone according to claim 1 or 2, **characterised in that** the transposed frequency obtained by the frequency changing means (14) of said first module (100) is zero.

5. Mobile telephone according to claim 2 or 3, **characterised in that** the transmission means (15) and the reception means (26) provide a Hertzian connection at a frequency of 2.45 GHz.

6. Mobile telephone according to one of the preceding claims, **characterised in that** data relating to the transmission power level of said telephone are transmitted, via said transmission means (15) and said reception means (16), from said first module (100) to said second module (200), where they are supplied to a control input of said amplifier (30) to control its output power level.

7. Mobile telephone according to one of the preceding claims, **characterised in that** data relating to the frequency of the transmission carrier of said telephone are transmitted, via said transmission means (15) and said reception means (16), from said first module (100) to said second module (200), where they are supplied to a control input of the frequency changing means (29).

8. Mobile telephone according to claim 6 or 7, **characterised in that** said first module (100) comprises a multiplexer (13) intended to multiplex the signals carrying said data with the transposed-frequency signals, and **in that** said second module (200) comprises a demultiplexer (27) for delivering the transposed-frequency signals, on the one hand, and the signals carrying said data, on the other hand.

9. Mobile telephone according to claim 8, **characterised in that** said data modulate a carrier so as to form said signals carrying said data, said multiplexer (13) and said demultiplexer (29) being of the frequency divider type.

10. Mobile telephone according to one of the preceding claims, **characterised in that** a signalling channel is provided between said first module (100) and said second module (200), in which signalling signals circulate in order to establish the connection between the transmission means (15) of said first module (100) and the reception means (26) of said second module (200) so as to ensure that they are matched.

11. Mobile telephone according to one of the preceding claims, **characterised in that** a signalling channel is provided between said first module (100) and said second module (200), in which signalling signals circulate to check the integrity of the connection between the transmission means (15) of said first module (100) and the reception means (26) of said second module (200).

12. Mobile telephone system, **characterised in that** it comprises a mobile telephone according to one of the preceding claims and at least one other module identical to said second module (200) of said mobile telephone.

## Patentansprüche

1. Mobiltelefon, umfassend eine Sendekette (11), die dazu vorgesehen ist, die Signale eines Mikrofons (10) zu empfangen, und die mit einem Modulator (11b) versehen ist, um entsprechende durch eine mit jeder des Mobiltelefons identische digitale Modulation modulierte Signale auf einer Trägerfrequenz mit einer ersten Frequenz f0 zu liefern, einen Verstärker (30), der mit einer Sendeantenne (31) verbunden ist, um, moduliert auf die Sendefrequenz des Mobiltelefons, Funkfrequenzsignale zu entsenden, die den auf die erste Frequenz f0 modulierten Signalen entsprechen, und eine Empfangskette (12), die dazu vorgesehen ist, Signale von einer Antenne (16) zu empfangen und sie über Wiedergabemittel (18) wiederzugeben, nachdem sie einen Demodulator (12a) und einen Decoder (12b) durchlaufen haben, wobei die Sendekette (11) und die Empfangskette (12) durch eine einzige Steuereinheit (19) gesteuert werden, wobei das Mobiltelefon zwei getrennte Module umfasst,
**dadurch gekennzeichnet, dass**:
- die Sendekette (11), die Empfangskette (12) und die Steuereinheit (19) in einem der Module (100), erstes Modul genannt, montiert sind, während der Verstärker (30) und die Sendeantenne (31) in dem anderen Modul (200), zweites Modul genannt, montiert sind,
und dass
- das erste Modul (100) ferner Frequenzänderungsmittel (14), um die erste Frequenz f0 der Trägerwelle der modulierten Signale, die von der Sendekette (11) kommen, in eine zweite Frequenz fT zu transponieren, die sich von der ersten Frequenz f0 unterscheidet, ohne dass der Modulationstyp durch die Transposition verändert wird, und Mittel (15) zum Senden der Signale an die zweite Frequenz fT umfasst, und
- das zweite Modul (200) Empfangsmittel (26) für die von den Sendemitteln (15) entsandten Signale und Frequenzänderungsmittel (14) umfasst, um die zweite Frequenz fT der so empfangenen Signale in die Sendefrequenz f des Mobiltelefons zu transponieren, ohne dass der Modulationstyp durch die Transposition verändert wird.

2. Mobiltelefon nach Anspruch 1, **dadurch gekennzeichnet, dass** die Sendemittel (15) und die Empfangsmittel (26) eine Draht-, Optik- oder Funkverbindung sicherstellen.

3. Mobiltelefon nach Anspruch 1 oder 2, **dadurch gekennzeichnet, dass** die Frequenz f0 der Trägerwelle der am Ausgang der Sendekette (11) des ersten Moduls (100) modulierten Signale gleich Null ist.

4. Mobiltelefon nach Anspruch 1 oder 2, **dadurch gekennzeichnet, dass** die durch die Frequenzänderungsmittel (14) des ersten Moduls (100) erhaltene transponierte Frequenz gleich Null ist.

5. Mobiltelefon nach Anspruch 2 oder 3, **dadurch gekennzeichnet, dass** die Sendemittel (15) und die Empfangsmittel (26) eine Funkverbindung mit einer Frequenz von 2,45 GHz sicherstellen.

6. Mobiltelefon nach einem der vorhergehenden Ansprüche, **dadurch gekennzeichnet, dass** Informationen über das Sendeleistungsniveau des Telefons über die Sendemittel (15) und die Empfangsmittel (16) vom ersten Modul (100) an das zweite Modul (200) übertragen werden, wo sie an einen Steuereingang des Verstärkers (30) geliefert werden, um sein Ausgangsleistungsniveau zu steuern.

7. Mobiltelefon nach einem der vorhergehenden Ansprüche, **dadurch gekennzeichnet, dass** Informationen über die Frequenz der Sendeträgerwelle des Telefons über die Sendemittel (15) und die Empfangsmittel (16) vom ersten Modul (100) an das zweite Modul (200) übertragen werden, wo sie an einen Steuereingang der Frequenzänderungsmittel (29) geliefert werden.

8. Mobiltelefon nach Anspruch 6 oder 7, **dadurch gekennzeichnet, dass** das erste Modul (100) einen Multiplexer (13) umfasst, der dazu vorgesehen ist, Signale, die die Informationen tragen, mit den Signalen mit transponierter Frequenz zu multiplexen, und dass das zweite Modul (200) einen Demultiplexer (27) umfasst, um die Signale mit transponierter Frequenz einerseits und die Signale, die die Informationen tragen, andererseits zu liefern.

9. Mobiltelefon nach Anspruch 8, **dadurch gekennzeichnet, dass** die Informationen eine Trägerwelle modulieren, um so die Signale zu bilden, die die Informationen tragen, wobei der Multiplexer (13) und der Demultiplexer (29) vom Typ mit Frequenzteilung sind.

10. Mobiltelefon nach einem der vorhergehenden Ansprüche, **dadurch gekennzeichnet, dass** ein Anzeigekanal zwischen dem ersten Modul (100) und dem zweiten Modul (200) vorgesehen ist, auf dem Anzeigesignale zirkulieren, um die Verbindung zwischen den Sendemitteln (15) des ersten Moduls (100) und den Empfangsmitteln (26) des zweiten Moduls (200) herzustellen, um sicherzustellen, dass sie zusammenpassen.

11. Mobiltelefon nach einem der vorhergehenden Ansprüche, **dadurch gekennzeichnet, dass** ein Anzeigekanal zwischen dem ersten Modul (100) und dem zweiten Modul (200) vorgesehen ist, auf dem Anzeigesignale zirkulieren, um die Integrität der Verbindung zwischen den Sendemitteln (15) des ersten Moduls (100) und den Empfangsmitteln (26) des zweiten Moduls (200) zu überprüfen.

12. Mobiltelefonsystem, **dadurch gekennzeichnet, dass** es ein Mobiltelefon nach einem der vorhergehenden Ansprüche und mindestens ein weiteres Modul umfasst, das mit dem zweiten Modul (200) des Mobiltelefons identisch ist.
